# EUROPÄISCHE PATENTSCHRIFT

(11) **EP 1 718 696 B1**
(45) Veröffentlichungstag und Bekanntmachung des Hinweises auf die Patenterteilung: **08.04.2009**
(21) Anmeldenummer: 05715362.9
(22) Anmeldetag: 17.02.2005
(51) Int. Cl.: C08K 5/103

(54) **GLEITMITTELKOMBINATIONEN**
LUBRICANT COMBINATIONS
COMBINAISONS DE LUBRIFIANTS

(30) Priorität: 26.02.2004 DE 102004009895
(43) Veröffentlichungstag der Anmeldung: 08.11.2006
(73) Patentinhaber: Cognis Oleochemicals GmbH, 40589 Düsseldorf (DE)
(72) Erfinder: DAUTE, Peter, 27616 Beverstedt (DE)
(74) Vertreter: Herzog, Martin
(86) Internationale Anmeldenummer: PCT/EP2005/001592
(87) Internationale Veröffentlichungsnummer: WO 2005/082991

(56) Entgegenhaltungen:
- US-A- 3 479 309
- US-A- 4 637 887
- US-A1- 2003 096 132
- US-B1- 6 818 689

## Beschreibung

### Gebiet der Erfindung

Die Erfindung liegt auf dem Gebiet der thermoplastischen Kunststoffe und betrifft Gleitmittelkombinationen für deren Verarbeitung. Die Gleitmittelkombinationen enthalten natürliche Fette und/oder Öle mit Jodzahlen unter 10 in Kombination mit üblichen Gleitmitteln für thermoplastische Kunststoffe gemäß Anspruch 1. Zudem betrifft die Erfindung die Verwendung dieser Gleitmittelkombinationen für thermoplastische Kunststoffe.

### Stand der Technik

Bei der Verarbeitung von thermoplastischen Kunststoffen werden Gleitmittel als Verarbeitungshilfsmittel zugesetzt. Einerseits können die Gleitmittel die innere Reibung zwischen Kunststoffteilchen reduzieren, wodurch der Aufschmelzvorgang der Kunststoffe erleichtert und die Bildung einer homogenen fließfähigen Masse gefördert wird. Derartig wirkende Gleitmittel werden häufig auch als innere Gleitmittel bezeichnet.

Zum anderen können Gleitmittel in der Kunststoffverarbeitung das Kleben der Kunststoffschmelze an heißen Oberflächen der Maschinenteile oder an den Wänden der Formwerkzeuge mindern. Man nimmt an, dass die Gleitmittel, die nach ihrer Einarbeitung in den Kunststoff aufgrund ihrer nur begrenzten Verträglichkeit aus dem Kunststoff an die Oberfläche auswandern, das Kleben herabsetzen. Derartig wirkende Gleitmittel werden auch als äußere Gleitmittel oder als "Formtrennmittel" bezeichnet.

Prinzipiell hat die Verwendung der Gleitmittel auch erheblichen Einfluss auf die Morphologie, Homogenität und Oberflächenbeschaffenheit der Kunststofferzeugnisse.

Ob ein Additiv als inneres oder äußeres Gleitmittel wirkt, hängt von vielen Faktoren ab, insbesondere von dessen Struktur und von der Art des Kunststoffes, wobei innere und äußere Gleitwirkung in vielen Fällen auch nebeneinander bestehen können. Eine erste Orientierung zu Gleitmitteln in PVC und deren Wirkung als inneres und äußeres Gleitmittel sind der Übersicht in Becker/Braun, Kunststoffhandbuch Bd. 2/1, Carl Hanser Verlag, 1986, S. 570-595 zu entnehmen.

Bekannte Gleitmittel für Kunststoffe sind beispielsweise Fettsäuren, Fettalkohole, Fettsäureester, Fettsäurekomplexester, Wachsester, Dicarbonsäureester, Amidwachse, Metallseifen, Montanwachse, Kohlenwasserstoffwachse oder oxidierte Kohlenwasserstoffe.

Natürliche Fette und Öle haben obgleich ihrer ökologischen und ökonomischen Vorteile indes keine breite Anwendung als Gleitmittel für die Kunststoffherstellung gefunden, da sie zu extrem als externes Gleitmittel wirken, d.h. sie reduzieren die innere Gleitwirkung zwischen den Kunststoffteilchen praktisch nicht, so dass kein homogener Schmelzfluss erhalten wird, und sie gleichzeitig aufgrund ihrer Unverträglichkeit herausschwitzen und Transparenzprobleme verursachen. So werden bisher bei Einsatz derartiger natürlicher Fette und Öle Kunststoffteile mit Stippen erhalten, die zudem nicht transparent sind.

Die Aufgabe der vorliegenden Erfindung hat darin bestanden, Gleitmittelkombinationen bereitzustellen, die auf den ökologisch hervorragend verträglichen natürlichen Fetten und Ölen basieren. Die Gleitmittelkombinationen sollten aber nicht die bekannten Nachteile der natürlichen Fette und Öle aufweisen. Vielmehr galt es Gleitmittelkombinationen zur Verfügung zu stellen, die die positiven Eigenschaften der bisher genutzten üblichen Gleitmittel für Kunststoffe aufweisen und dennoch ohne nennenswerte Veränderung dieser positiven Eigenschaften zumindest anteilsweise durch Verbindungen ersetzt werden, die auf natürlichen Fetten und Ölen basieren.

Die Aufgabe konnte gelöst werden, wenn natürliche Fette und Öle mit Jodzahlen unter 10 in Mischung mit üblichen Gleitmitteln in den Gleitmittelmischungen enthalten sind. Überraschenderweise zeigen derartige Gleitmittelkombinationen die positiven Eigenschaften der üblichen Gleitmittel für Kunststoffe, obgleich sie anteilsweise ersetzt wurden durch natürliche Fette und Öle mit Jodzahlen unter 10.

So zeigen insbesondere Gleitmittelkombinationen aus Dicarbonsäurefettestern, insbesondere Distearylphthalat, als eher inneres Gleitmittel in PVC in Kombination mit natürlichen Fetten und Ölen mit Jodzahlen unter 10, insbesondere gehärteter Talg, vergleichbare innere Gleitwirkung wie der Dicarbonsäurefettester alleine.

### Beschreibung der Erfindung

### Gegenstand der vorliegenden Erfindung sind demnach:

Gleitmittelkombinationen für thermoplastische Kunststoffe gemäß Anspruch 1.

Verfahren zur Herstellung von Gleitmittel beinhaltenden thermoplastischen Kunststoffen gemäß Anspruch 9.

Ein weiterer Gegenstand der vorliegenden Erfindung betrifft die Verwendung von natürlichen Fetten und Ölen mit Jodzahlen unter 10 als Gleitmittel mit inneren und äußeren Gleitmitteleigenschaften für thermoplastische Kunststoffe, vorzugsweise für polare Kunststoffe gemäß Anspruch 14.

### Thermoplastische Kunststoffe

Im Hinblick auf die thermoplastischen Kunststoffe bestehen an sich keine Beschränkungen. Bevorzugt werden thermoplastische Kunststoffe ausgewählt aus der Gruppe von Polyethylen, Polypropylen, Polyethylentherephthalat (PET), Polycarbonat, Polyamid, Polyester, Polystyrol und Coppolymere und Polyvinylchlorid gebildeten Gruppe, wobei diese thermoplastischen Kunststoffe stabilisiert, pigmentiert, mit Füllstoffen gefüllt oder modifiziert sein können wie das mit Kautschuk modifizierte schlagzähe Polypropylen.

### Beispiele für geeignete Kunststoffe sind:

- Homopolymere aus einem α-Olefin mit zwei bis acht Kohlenstoffatomen, Copolymerisate von zwei entsprechenden α-Olefinen, vorzugsweise Copolymerisate aus Ethylen, Ethylen-Homopolymerisate wie HDPE (high density polyethylene), LDPE (low density polyethylene), VLDPE (very low density polyethylene), LLEPE (linear low density polyethylene), MDPE (medium density polyethylene), UHMPE (ultra high molecular polyethylene), VPE (vernetztes Polyethylen), HPPE (high pressure polyethylene), isotaktisches Polypropylen, syndiotaktisches Polypropylen, Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen, Homopolymere auf Basis 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2, 3-Dimethyl-1-Butylen, 2-Ethyl-1-Butylen sowie Mischungen davon.
- Copolymerisate von Ethylen mit 1-Butylen, 1-Hexylen, 1-Octylen und 4-Methyl-1-Pentylen.
- Ethylen-Vinylacetat-Copolymerisate, Ethylenethylacetat-Copolymerisate, Ethylenacrylsäure-Copolymerisate und Mischungen davon.
- Ethylenpropylengummi (EPDM), auch Dien-modifiziert (EPR), Styrol-Butadien-Styrol-Copolymerisate (SBS), Styrol-Ethylen-Buthylen-Styrol-Copolymerisate (SEBS) und Mischungen davon.
- Halogenhaltige Kunststoffe, insbesondere Homopolymerisate von Vinylverbindungen, beispielsweise von Vinylchlorid.

### Natürliche Fette und Öle mit Jodzahlen unter 10/Komponente a)

Im Sinne der vorliegenden Erfindung ist es wesentlich, dass die natürlichen Fette und Öle eine Jodzahl unter 10, vorzugsweise unter 8 und insbesondere zwischen 0,1 bis 5 aufweisen.

Die Jodzahl wurde bestimmt nach der in der DGF C/V 11 d beschriebenen Methode.

Derartige Fette und Öle können natürlich vorkommen oder durch Hydrierung von natürlichen Fetten und Ölen mit einem höheren Anteil an ungesättigten Fettsäuren und damit mit höherer Jodzahl erhalten werden. Ein Beispiel für natürliche vorkommende Fette und Öle mit Jodzahlen unter 10 kann das je nach Ernte und Anbaugebiet erhältliche Kokosöl sein, wobei naturgemäß die Fettsäurezusammensetzung dieses natürlichen Öls schwanken kann. Im Sinne der Erfindung ist nur solches natürliche Kokosöl geeignet, dass Jodzahlen unter 10 aufweist.

Weitere geeignete natürliche Fette und Öle mit Jodzahlen unter 10 sind erhältlich durch Hydrierung der Doppelbindungen der ungesättigten Fettsäuren in natürlichen Fetten und Ölen in an und sich bekannter Weise. Zur Hydrierung eignen sich als natürliche Öle und Fette Palmöl, Palmkernöl, Kokosöl, Olivenöl, Rüböl alter und neuer Züchtung, Sonnenblumenöl alter und neuer Züchtung, Leinöl, Erdnussöl, Baumwollsaatöl, Korianderöl, Meadowfoamöl, Lardöl, Schweineschmalz, Rindertalg und Fischöl, Korianderöl, Chaulmograaöl, Leinöl, Meadowfoamöl oder Fischöl, insbesondere aber gehärteter(hydrierter) Rindertalg. Sowohl die hydrierten Fette und Öle mit Jodzahlen unter 10 als auch die zugrunde liegenden natürlichen Fette und Öle, die noch hydriert werden müssen, sind im Handel erhältlich. Bevorzugt ist gehärteter (hydrierter) Talg als Komponente a) in den Gleitmittelkombinationen enthalten.

### Weitere übliche Gleitmittel/ Komponente b)

Neben den erfindungsgemäß wesentlichen natürlichen Fetten und Ölen mit Jodzahlen unter 10 ist mindestens ein weiteres von a) verschiedenes für thermoplastische Kunststoffe übliches Gleitmittel enthalten, beispielsweise Fettsäuren mit 12 bis 24 C-Atomen, Fettalkohole mit 12 bis 24 C-Atomen, Ester aus Fettsäuren mit 12 bis 24 C-Atomen und Fettalkoholen mit 12 bis 24 C-Atomen (sogenannte Wachsester), Ester aus Fettsäuren mit 12 bis 24 C-Atomen und mehrwertigen Alkoholen mit 4 bis 6 Hydroxylgruppen (sogenannte Polyolester), Dicarbonsäureester aus Dicarbonsäuren und Fettalkoholen mit 12 bis 24 C-Atomen und Komplexester aus Dicarbonsäuren, Polyolen und Monocarbonsäuren. Die genannten üblichen Gleitmittel können sowohl einzeln als auch im Gemisch miteinander eingesetzt werden.

Als Fettsäure mit 12 bis 24 C-Atomen kommen sowohl native als auch synthetische geradkettige gesättigte Verbindungen in Betracht. Werden Fettsäuregemische eingesetzt, so können diese untergeordnete Mengen ungesättigter Fettsäuren enthalten. Beispiele für geeignete Fettsäuren sind Laurin-, Tridecan-, Myristin, Pentadecan-, Palmitin-, Margarin-, Stearin-, Behen- und Lignocerinsäure. Auch Hydroxylgruppen enthaltende Fettsäuren, wie 12-Hydroxystearinsäure kommen hier in Betracht. Derartige Fettsäuren können aus natürlich vorkommenden Fetten und Ölen, beispielsweise über die Fettspaltung bei erhöhter Temperatur und erhöhtem Druck und anschließende Trennung der erhaltenen Fettsäuregemische, gegebenenfalls Hydrierung der vorhandenen Doppelbindungen, erhalten werden. Vorzugsweise werden hier technische Fettsäuren eingesetzt, die in der Regel Gemische verschiedener Fettsäuren eines bestimmten Kettenlängenbereichs mit einer Fettsäure als Hauptbestandteil darstellen. Bevorzugt werden Fettsäuren mit 12 bis 18 C-Atomen alleine oder in Mischung.

Bei den Fettalkoholen mit 12 bis 24 C-Atomen handelt es sich meist um geradkettige gesättigte Vertreter, die aus natürlich vorkommenden Fetten und Ölen über die Umesterung mit Methanol, anschließender katalytischer Hydrierung der erhaltenen Methylester und fraktionierte Destillation erhalten werden können. Beispiele für solche Fettalkohole sind Lauryl-, Myristyl-, Cetyl-, Stearyl- und Behenylalkohol. Diese Verbindungen können einzeln und im Gemisch miteinander enthalten sein. Bevorzugt werden technische Fettalkohole eingesetzt, die normalerweise Gemische aus verschiedenen Fettalkoholen eines begrenzten Kettenlängenbereichs darstellen, in denen jeweils ein Fettalkohol als Hauptbestandteil vorhanden ist. Bevorzugt sind technische Fettalkoholmischungen mit 12 bis 18 C-Atomen.

Geeignet sind weiterhin sogenannte Wachsester, also Ester aus Fettsäuren mit 12 bis 24 C-Atomen und Fettalkoholen mit 12 bis 24 C-Atomen, die vorzugsweise der Formel (I) folgen,

**R¹CO-OR²** **(I)**

in der R¹CO für einen gesättigten und/oder ungesättigten Acylrest mit 12 bis 24, vorzugsweise 12 bis 18 Kohlenstoffatomen und R² für einen Alkyl- und/oder Alkenylrest mit 12 bis 24, vorzugsweise 12 bis 18 Kohlenstoffatomen steht. Typische Beispiele sind Ester von Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen mit Laurylalkohol, Isotridecylalkohol, Myristylalkohol, Cetylalkohol, Palmoleylalkohol, Stearylalkohol, Isostearyl-alkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen. Bevorzugte Wachsester sind Stearylpalmitat, Stearylstearat, Stearylisostearat, Stearyloleat, Stearylbehenat, Stearylerucat, Isosteraylpalmitat, Isostearylstearat, Isostearylisostearat, I-sostearyloleat, Isostearylbehenat, Isostearylerucat, Oleylpalmitat, Oleylstearat, Oleylisostearat, Oleyloleat, Oleylbehenat, Oleylerucat, Behenylpalmitat, Behenylstearat, Behenylisostearat, Behenyloleat, Behenylbehenat, Behenyloleat sowie deren Mischungen. Insbesondere bevorzugt als Wachsester ist Stearylstearat. Dabei ist zu beachten, dass Stearylstearat normalerweise aus technischen Ausgangsmaterialien hergestellt wird, die ihrerseits Stoffgemische sind, so dass der Ester ebenfalls ein Stoffgemisch darstellt.

Die genannten Ester können nach bekannten Methoden der organischen Synthese, beispielsweise durch Erhitzen stöchiometrischer Mengen Fettsäure und Fettalkohol auf 180 bis 250 °C, gegebenenfalls in Gegenwart eines geeigneten Veresterungskatalysators wie Zinnschliff und unter Schutzgas, und Abdestillieren des Reaktionswassers erhalten werden.

Weiterhin geeignet sind als Gleitmittel der Gruppe b) Polyolfettsäureester, d.h. Ester von Fettsäuren mit 12 bis 24 C-Atomen und Polyolen mit 4 bis 6 Hydroxylgruppen. Als Alkoholkomponente kommen vor allem aliphatische Polyole mit 4 bis 12 C-Atomen in Betracht, beispielsweise Erythrit, Pentaerythrit, Dipentaerythrit, Ditrimethylolpropan, Diglycerin, Triglycerin, Tetraglycerin, Mannit und Sorbit in Betracht. Bei diesen Polyolestern kann es sich um Vollester handeln, in denen sämtliche Hydroxylgruppen des Polyols mit Fettsäure verestert sind. Es kommen aber auch Polyolpartialester in Betracht, die im Molekül eine oder mehrere freie Hydroxylgruppen aufweisen. Diese Polyolfettsäureester können ebenfalls nach bekannten Verfahren der organischen Synthese durch Veresterung der Polyole mit stöchiometrischen oder unterstöchiometrischen Mengen freier Fettsäuren erhalten werden. Beispiele für solche Polyolfettsäureester sind die Stearinsäure- und Stearinsäure/Palmitinsäurevollester des Erythrits, Pentaerythrits und Dipentaerythrits und Diglycerins, die Dilaurate des Dipentaerythrits, Ditrimethylolpropans, Triglycerins, Mannits und Sorbits, die Distearate des Erythrits, Pentaerythrits, Dipentaerythrits und Tetraglycerins sowie die so genannten Sesquiester des Pentaerythrits, Dipentaerythrits, Mannits und Sorbits, zu deren Herstellung man auf 1 Mol Polyol 1,5 Mol Fettsäure, insbesondere Palmitin- und/oder Stearinsäure, einsetzt. Die genannten Polyolfettsäureester stellen in der Regel, schon auf Grund der jeweils eingesetzten Ausgangsmaterialien, Stoffgemische dar.
Besonders geeignete Polyolfettsäureester sind Pentaerythrittetrastearat und/oder Dipentaerythrithexastearat als Gleitmittel der Gruppe b).

Weiterhin geeignete Gleitmittel der Gruppe b) sind Komplexester, die ebenfalls aus dem Stand der Technik an und für sich bekannt sind. Die Komplexester sind prinzipiell aufgebaut aus Dicarbonsäuren, Polyole und Monocarbonsäuren. Zur Herstellung der Komplexester können folgende Dicarbonsäuren eingesetzt werden: Oxal-, Malon-, Bernstein-, Glutar-, Adipin-, Pimelin-, Kork-, Azelain-, Sebazin-, Nonandicarbon-, Undecandicarbon-, Eikosandicarbon-, Malein-, Fumar-, Citracon-, Mesacon-, Itakon-, Cyclopropandicarbon-, Cyclobutandicarbon-, Cylopentandicarbon-, Campher-, Hexahydrophthal-, Phthal-, Terephthal-, Isophthal-, Naphthal- und Diphenyl-o,o'-dicarbonsäure. Als aliphatische Polyole mit 2 bis 6 Hydroxylgruppen werden in der Regel folgende Verbindungen verwendet: Ethylenglykol, 1,2-Propylenglykol, 1,3-Propylenglykol, 1,4-Butandiol, 2,3-Butandiol, 1,5-Pentandiol, 1,6-Hexandiol, Glycerin, Trimethylolpropan, Erythrit, Pentaerythrit, Dipentaerythrit, Xylit, Mannit und Sorbit. Als Monocarbonsäure eignen sich geradkettige oder verzweigte, synthetische oder native Säuren, beispielsweise Laurin-, Myristin-, Palmitin-, Margarin-, Stearin-, Arachidin-, Behen-, Lignocerin-, Cerotinsäure, Montansäure, Öl-, Elaidin-, Eruka-, Linol-, Linolen- und Isostearinsäure, ferner Gemische dieser Säuren, insbesondere solche, wie sie aus natürlichen Fetten und Ölen gewonnen werden können.

Bevorzugte Komplexester sind aus aliphatischen Dicarbonsäuren mit 4 bis 8 C-Atomen, Polyolen mit 3 oder 4 Hydroxylgruppen und aliphatischen Monocarbonsäuren mit 14 bis 22 C-Atomen aufgebaut. Hervorragende Ergebnisse werden mit Komplexestern aus Adipinsäure, Pentaerythrit und Monocarbonsäuren mit 14 bis 22 C-Atomen erzielt.

Weiterhin geeignete Gleitmittel im Sinne der Erfindung als Gruppe b) sind Dicarbonsäureester von Fettalkoholen mit 12 bis 24 C-Atomen. Geeignete Dicarbonsäuren sind bereits im Zusammenhang mit den Komplexestern exemplarisch aufgeführt worden. Als Fettsäuren eignen sich die bereits oben besprochenen Fettsäuren. Besonders bevorzugt sind Phthalatsäureester und insbesondere Distearylphthalat.

Weitere Gleitmittel, die alleine oder in Kombination eingesetzt werden können, sind Kohlenwasserstoffwachse, die im Temperaturbereich von 70 bis 130°C schmelzen, oxidierte Polyethylenwachse, α-Olefine, Ethylendiamindistearat, Montansäureester von Diolen, beispielsweise von Ethandiol, 1,3-Butandiol und Glycerin, Mischungen derartiger Montansäureester mit unver-esterten Montansäuren und Metallseifen, insbesondere Salze von organischen Monocarbonsäuren mit Metallen der zweiten Haupt- und/oder Nebengruppe des Periodensystems, wie Calciumseifen und Zinkseifen.

Im Rahmen der Erfindung werden natürliche Fette und Öle mit Jodzahlen unter 10 in Mischung mit üblichen Gleitmitteln für thermoplastische Kunststoffe der Gruppe b) eingesetzt wobei die üblichen Gleitmitteln b) ausgewählt sind aus der Gruppe der Fettsäureester von Fettalkoholen (Wachsester), Dicarbonsäureester von Fettalkoholen und/oder Polyolfettsäureester.

Insbesondere bevorzugte Gleitmittelmischungen sind Mischungen aus gehärtetem Talg und Stearylstearat oder gehärtetem Talg und Distearylphthalat oder gehärtetem Talg und Pentaerythrittetrastearat oder gehärtetem Talg und Dipentaerythrithexastearat.

In der Regel werden die natürlichen Fette und Öle mit Jodzahlen unter 10 (Komponente a) und die weiteren aus dem Stand der Technik bekannten Gleitmittel (Komponente b) in einem Gewichtsverhältnis von 20 : 80 bis 80 : 20, vorzugsweise 40 :60 bis 60 : 40 und insbesondere etwa 50 : 50 eingesetzt.

Bevorzugt werden die natürlichen Fette und Öle mit Jodzahlen unter 10 zusammen mit dem weiteren Gleitmittel (Komponente b) konfektioniert, bevor es den thermoplastischen Kunststoffen zugesetzt wird. Vorteilhafterweise werden die natürlichen Fette und Öle mit Jodzahlen unter 10 zusammen mit dem weiteren Gleitmittel aufgeschmolzen und anschließend in üblicher Weise konfektioniert, beispielsweise mittels Sprühkristallisation.

Die praktische Anwendung der erfindungsgemäßen Gleitmittelmischungen erfolgt in der Weise, dass sie den zu verarbeitenden thermoplastischen Kunststoffen in Mengen von 0,01 bis 10, vorzugsweise 0,05 bis 5 und insbesondere 0,1 bis 3 Gewichtsteile zu 100 Gewichtsteilen thermoplastischen Kunststoffes beigegeben werden. Zweckmäßigerweise werden die Gleitmittelmischungen der bei der Herstellung des thermoplastischen Kunststoffes anfallenden Schmelze zugesetzt oder auf das Kunststoffgranulat bzw. -pulver bei erhöhten Temperaturen aufgebracht.

Die thermoplastischen Kunststoffe können zusätzliche Additive enthalten. Beispiele für geeignete Additive sind Antistatika, Antischleiermittel, Antioxidantien, UV-Stabilisatoren, Haftmittel, Kalandrierhilfen, Trennmittel, Schmiermittel, Weichmacher, Duftmittel, Flammschutzmittel, Füllstoffe und Mittel zur Erhöhung der Thermostabilität (Thermostabilisatoren).
Die thermoplastischen Kunststoffe können problemlos auf übliche Weise weiterverarbeitet werden, beispielsweise mittels Extrusion, Pressen, Walzen, Kalandrieren, Sintern, Spinnen, Hohlkörperblasen, Schäumen, Spritzgießen oder eine Verarbeitung nach dem Plastisol-Verfahren.

Besonders gute Effekte finden sich bei Kunststoffen wie Polyamid, ABS, PC und PVC.

Durch Verwendung der natürlichen Fette und Öle mit Jodzahlen unter 10 zusammen mit den üblichen Gleitmitteln ist bei diesen Kunststoffen die Gleitfähigkeit und die Trennwirkung ausgezeichnet. Zusätzlich erfolgt ein gleichmäßiger schneller Fluss der Schmelze des Kunststoffes.

### Beispiele

### A) Herstellung der erfindungsgemäßen Gleitmittelkombination:

In einem Becherglas wurden 100 g Stearylstearat und 100 g gehärteter Talg (JZ = 0.3) auf 80°C erwärmt und durch Rühren homogenisiert. Danach ließ man die Mischung in einer Metallwanne abkühlen (Mischung I).

In einem Becherglas wurden 100 g Distearylphthalat und 100 g gehärteter Talg (JZ = 0.3) auf 80°C erwärmt und durch Rühren homogenisiert. Danach ließ man die Mischung in einer Metallwanne abkühlen (Mischung II).

### B) Herstellung der Dryblends

### B1-B3) Herstellung eines PVC-Dryblends

Aus PVC-Pulver und verschiedenen unten angeführten Additiven wurde in einem Mischer der Firma Henschel ein Dry-Blend hergestellt (Materialmenge = 3 kg, Heiztemperatur = 120°C, anschließendes Abkühlen). Die Zusammensetzungen sind der nachfolgenden Tabelle zu entnehmen.

| **Beispiel:** | **B1** | **B2** | **B3** |
|---|---|---|---|
| PVC Evipol SH 6830 | 100 | 100 | 100 |
| Kreide Hydrocarb 95 T | 3 | 3 | 3 |
| Bleiphosphit 2-basisch | 2 | 2 | 2 |
| Bleistearat 51 % | 1 | 1 | 1 |
| Calciumstearat | 0.6 | 0.6 | 0.6 |
| Distearylphthalat | 1.0 | - | - |
| Gehärteter Talg | - | 1.0 | - |
| Mischung aus geh. Talg und Distearylphthalat (Mischung II) | - | - | 1.0 |

Beispiel B3 ist erfindungsgemäß.

### B4-B5) Herstellung eines Extrusions-PVC-Dryblends

| **Beispiel:** | **B4** | **B5** |
|---|---|---|
| Vestolit P 1982 K | 100 | 100 |
| Kreide Omyalite 95 T | 4 | 4 |
| TiO2 Kronos 2220 | 4 | 4 |
| Stabilox CZE 2040® | 4 | 4 |
| (CaZn-Stabilisator Fa. Cognis) | | |
| techn. Stearinsäure | 0.3 | 0.3 |
| Stearylstearat | 0.5 | - |
| Mischung aus geh. Talg und Stearylstearat, (Mischung I) | - | 0.5 |

Beispiel B5 ist erfindungsgemäß.

### C. Herstellung der Flachbänder

Die Dry-Blends B1) bis B5) wurden auf einem Doppelschneckenextruder der Firma Weber zu einem Flachband extrudiert (Parameter der Extrusion: Drehzahl = 15 UpM (B1-B3), 25 UpM (B4,B5); Temperatur = 180°C). Als Maß für die Gleitmittelwirksamkeit wurde die Leistungsaufnahme des Extruders, die Maschinenbelastung, (in %) ausgewertet.

| **Beispiel** | **Maschinenbelastung (%)** | **Massedruck (bar)** |
|---|---|---|
| B1 | 71.3 | 362 |
| B2 | 57.9 | 313 |
| B3 | 70.9 | 354 |
| B4 | 50 | 231 |
| B5 | 51 | 231 |

Das erfindungsgemäße Beispiel B3 zeigt, dass die Maschinenbelastung und der Massedruck der erfindungsgemäßen Gleitmittelmischung in etwa denen des üblichen Gleitmittels Distearylphthalt entsprechen. Demgegenüber zeigt der Einsatz von gehärtetem Talg allein eine derart niedrige Maschinenbelastung und hohen Massedruck, dass kein homogener PVC-Schmelzfluss erreicht wird, so dass inhomogene Kunststoffteile entstehen. Analoges ergibt das erfindungsgemäße Beispiel B5.

## Patentansprüche

1. Gleitmittelkombinationen für thermoplastische Kunststoffe enthaltend
a) natürliche Fette und Öle mit Jodzahlen unter 10 und
b) von a) verschiedene übliche Gleitmittel für thermoplastische Kunststoffe,
wobei die Fette und Öle a) in Form natürlich vorkommender Fette und Ölen oder deren Hydrierungsprodukte eingesetzt werden können und wobei gilt, dass die üblichen Gleitmittel b) ausgewählt sind aus der von Fettsäureester von Fettalkoholen, Dicarbonsäureestern von Fettalkoholen und Polyolfettsäureester gebildeten Gruppe.

2. Gleitmittelkombinationen nach Anspruch 1, **dadurch gekennzeichnet, dass** die Fette und Öle Jodzahlen unter 8, vorzugsweise zwischen 0,1 bis 5, aufweisen.

3. Gleitmittelkombinationen nach Anspruch 1, **dadurch gekennzeichnet, dass** die
a) Fette und Öle und die
b) von a) verschiedenen üblichen Gleitmittel zur thermoplastische Kunststoffe
im Gewichtsverhältnis 20 : 80 bis 80 : 20, vorzugsweise 40: 60 bis 60 : 40 enthalten sind.

4. Gleitmittelkombinationen nach Anspruch 1, **dadurch gekennzeichnet, dass** als übliches Gleitmittel für thermoplastische Kunststoffe der Gruppe b) Stearylstearat enthalten ist.

5. Gleitmittelkombinationen nach Anspruch 1, **dadurch** gekennzeichet, dass als übliches Gleitmittel für thermoplastische Kunststoffe der Gruppe b) Distearylphthalat enthalten ist.

6. Gleitmittelkombinationen nach Anspruch 1, **dadurch gekennzeichnet, dass** als übliches Gleitmittel für thermoplastische Kunststoffe der Gruppe b) Pentaerythrittetrastearat enthalten ist.

7. Gleitmittelkombinationen nach Anspruch 1, **dadurch gekennzeichnet, dass** als übliche Gleitmittel für thermoplastische Kunststoffe der Gruppe b) Dipentaerythrithexastearat enthalten ist.

8. Gleitmittelkombinationen nach einem der Ansprüche 1 bis 8, **dadurch gekennzeichnet, dass** als natürliche Fette und Öle gehärteter Talg enthalten ist.

9. Verfahren zur Herstellung von Gleitmittel beinhaltenden thermoplastischen Kunststoffen, beinhaltend die Verfahrensschritte:
a. Konfektionieren von natürlichen Fetten und Ölen mit Jodzahlen unter 10 zusammen mit dem weiteren Gleitmittel (Komponente b)) zu einer Gleitmittelmischung,
b. Zugabe der Gleitmittelmischung zu den thermoplastischen Kunststoffen,
wobei die natürlichen Fette und Öle in Form natürlich vorkommender Fette und Öle oder deren Hydrierungsprodukte eingesetzt werden können, und wobei die üblichen Gleitmittel b) ausgewählt sind aus der von Fettsäureester von Fettalkoholen, Dicarbonsäureestern von Fettalkoholen und Polyolfettsäureester gebildeten Gruppe.

10. Verfahren nach Anspruch 9, wobei die natürlichen Fette und Öle mit Jodzahlen unter 10 zusammen mit dem weiteren Gleitmittel vor dem Konfektionieren aufgeschmolzen werden.

11. Verfahren nach Anspruch 10, wobei das Konfektionieren mittels Sprühkristallisation erfolgt.

12. Verfahren nach einem der Ansprüche 9 bis 11, wobei die Gleitmittelmischung in einer Menge von 0,01 bis 10 Gewichtsteile zu 100 Gewichtsteilen des zu verarbeitenden thermoplastischen Kunststoffes beigegeben werden.

13. Verfahren nach einem der Ansprüche 9 bis 12, wobei die Gleitmittelmischung
a. der bei der Herstellung des thermoplastischen Kunststoffes anfallenden Schmelze zugesetzt, oder
b. auf das Kunststoffgranulat oder Kunststoffpulver bei erhöhter Temperatur aufgebracht
wird.

14. Verwendung von Gleitmittelkombinationen nach einem der Ansprüche 1 bis 8 für thermoplastische Kunststoffe.

15. Verwendung nach Anspruch 14, wobei die thermoplastischen Kunstoffe ausgewählt sind aus der Gruppe bestehend aus Polyamid, ABS, PC und PVC.

## Claims

1. Lubricant combinations for thermoplastic polymers containing
a) natural fats and oils having iodine values below 10 and
b) conventional lubricants different from a) for thermoplastic polymers,
wherein the fats and oils a) can be used in the form of naturally occurring fats and oils or the hydrogenation products thereof and wherein it is the case that the conventional lubricants b) are selected from the group formed by fatty acid ester of fatty alcohols, dicarboxylic acid esters of fatty alcohols and polyol fatty acid ester.

2. Lubricant combinations according to claim 1, **characterised in that** the fats and oils have iodine values below 8, preferably between 0.1 and 5.

3. Lubricant combinations according to claim 1, **characterised in that** the
a) fats and oils and the
b) conventional lubricants different from a) for thermoplastic polymers
are contained in a ratio by weight of from 20 : 80 to 80 : 20, preferably 40 : 60 to 60 : 40.

4. Lubricant combinations according to claim 1, **characterised in that** stearyl stearate is contained as the conventional lubricant for thermoplastic polymers of group b).

5. Lubricant combinations according to claim 1, **characterised in that** distearyl phthalate is contained as the conventional lubricant for thermoplastic polymers of group b).

6. Lubricant compositions according to claim 1, **characterised in that** pentaerythritol tetrastearate is contained as the conventional lubricant for thermoplastic polymers of group b).

7. Lubricant compositions according to claim 1, **characterised in that** dipentaerythritol hexastearate is contained as the conventional lubricant for thermoplastic polymers of group b).

8. Lubricant combinations according to one of claims 1 to 8, **characterised in that** hardened tallow is contained as natural fats and oils.

9. Process for preparing lubricant-containing thermoplastic polymers, including the following process steps:
a. producing natural fats and oils having iodine values below 10 together with the further lubricant (component b)) to form a lubricant mix,
b. adding the lubricant mix to the thermoplastic polymers,
wherein the natural fats and oils can be used in the form of naturally occurring fats and oils or the hydrogenation products thereof, and wherein the conventional lubricants b) are selected from the group formed by fatty acid ester of fatty alcohols, dicarboxylic acid esters of fatty alcohols and polyol fatty acid ester.

10. Process according to claim 9, wherein the natural fats and oils having iodine numbers below 10 are fused together with the further lubricant prior to the production.

11. Process according to claim 10, wherein the production takes place by means of spray crystallisation.

12. Process according to one of claims 9 to 11, wherein the lubricant mix is added in an amount of from 0.01 to 10 parts by weight to 100 parts by weight of the thermoplastic polymer to be processed.

13. Process according to one of claims 9 to 12, wherein the lubricant mix is
a. added to the melt which is formed during the preparation of the thermoplastic polymer, or
b. applied to the plastics material granules or plastics material powder at elevated temperature.

14. Use of lubricant combinations according to one of claims 1 to 8 for thermoplastic polymers.

15. Use according to claim 14, wherein the thermoplastic polymers are selected from the group consisting of polyamide, ABS, PC and PVC.

## Revendications

1. Combinaisons de lubrifiants pour matériaux synthétiques thermoplastiques, contenant
a) des graisses et huiles naturelles ayant des indices d'iode inférieurs à 10, et
b) des lubrifiants usuels pour matériaux synthétiques thermoplastiques, différents de a),
dans lesquelles les graisses et huiles a) peuvent être utilisées sous la forme de graisses et huiles présentes à l'état naturel ou sous la forme de leurs produits d'hydrogénation et les lubrifiants usuels b) sont choisis dans le groupe constitué par des esters d'acides gras avec des alcools gras, des esters d'acides dicarboxyliques avec des alcools gras et des esters d'acides gras avec des polyols.

2. Combinaisons de lubrifiants selon la revendication 1, **caractérisées en ce que** les graisses et huiles présentent des indices d'iode inférieurs à 8, de préférence compris dans la plage de 0,1 à 5.

3. Combinaisons de lubrifiants selon la revendication 1, **caractérisées en ce que**
a) les graisses et huiles et
b) les lubrifiants usuels pour matériaux synthétiques thermoplastiques différents de a)
sont présents selon un ratio en poids dans la plage de 20:80 à 80:20, de préférence de 40:60 à 60:40.

4. Combinaisons de lubrifiants selon la revendication 1, **caractérisées en ce que** le lubrifiant usuel pour matériaux synthétiques thermoplastiques du groupe b) qu'elles contiennent est le stéarate de stéaryle.

5. Combinaisons de lubrifiants selon la revendication 1, **caractérisées en ce que** le lubrifiant usuel pour matériaux synthétiques thermoplastiques du groupe b) qu'elles contiennent est le diphtalate de stéaryle.

6. Combinaisons de lubrifiants selon la revendication 1, **caractérisées en ce que** le lubrifiant usuel pour matériaux synthétiques thermoplastiques du groupe b) qu'elles contiennent est le tétrastéarate de pentaérythritol.

7. Combinaisons de lubrifiants selon la revendication 1, **caractérisées en ce que** le lubrifiant usuel pour matériaux synthétiques thermoplastiques du groupe b) qu'elles contiennent est l'hexastéarate de dipentaérythritol.

8. Combinaisons de lubrifiants selon l'une des revendications 1 à 8, **caractérisées en ce que** les graisses et huiles naturelles qu'elles contiennent sont du suif durci.

9. Procédé de fabrication de matériaux synthétiques thermoplastiques contenant des lubrifiants, comprenant les étapes consistant à :
a. confectionner un mélange de lubrifiants constitué de graisses et huiles naturelles ayant des indices d'iode inférieurs à 10 et de l'autre lubrifiant (composant b),
b. incorporer le mélange de lubrifiants dans les matériaux synthétiques thermoplastiques,
dans lequel les graisses et huiles a) peuvent être utilisées sous la forme de graisses et huiles présentes à l'état naturel ou sous la forme de leurs produits d'hydrogénation et les lubrifiants usuels b) sont choisis dans le groupe constitué par des esters d'acides gras avec des alcools gras, des esters d'acides dicarboxyliques avec des alcools gras et des esters d'acides gras avec des polyols.

10. Procédé selon la revendication 9, dans lequel les graisses et huiles naturelles ayant des indices d'iode inférieurs à 10 sont fondues ensemble avec l'autre lubrifiant avant la confection du mélange.

11. Procédé selon la revendication 10, dans lequel la confection se fait au moyen d'une cristallisation par pulvérisation.

12. Procédé selon l'une des revendications 9 à 11, dans lequel le mélange de lubrifiants est incorporé en une quantité allant de 0,01 à 10 parties en poids pour 100 parties en poids du matériau synthétique thermoplastique à transformer.

13. Procédé selon l'une des revendications 9 à 12, dans lequel le mélange de lubrifiants
a. est ajouté dans la fusion obtenue lors de la fabrication du matériau synthétique thermoplastique, ou
b. déposé à une température élevée sur les granulés de matériau synthétique ou sur la poudre de matériau synthétique.

14. Utilisation de combinaisons de lubrifiants selon l'une des revendications 1 à 8 pour des matériaux synthétiques thermoplastiques.

15. Utilisation selon la revendication 14, dans laquelle les matériaux synthétiques thermoplastiques sont choisis dans le groupe constitué par le polyamide, l'ABS, le polycarbonate et le PVC.
